# EUROPÄISCHE PATENTSCHRIFT

(11) **EP 0 721 695 B1**
(45) Veröffentlichungstag und Bekanntmachung des Hinweises auf die Patenterteilung: **06.08.1997**
(21) Anmeldenummer: 94928274.3
(22) Anmeldetag: 28.09.1994
(51) Int. Cl.: H02P 5/418

(54) **ELEKTROMOTOR MIT MITTELN ZUR ERFASSUNG DES DREHMOMENTES**
ELECTRIC MOTOR WITH TORQUE DETECTING MEANS
MOTEUR ELECTRIQUE A ELEMENTS DETECTEURS DU COUPLE MOTEUR

(30) Priorität: 02.10.1993 DE 4333675
(43) Veröffentlichungstag der Anmeldung: 17.07.1996
(73) Patentinhaber: ROBERT BOSCH GMBH, 70442 Stuttgart (DE)
(72) Erfinder: SCHUSTER, Dirk, D-71334 Waiblingen (DE); SEEL, Ottmar, D-70771 Leinfelden-Echterdingen (DE); HIRSCHBURGER, Wolfgang, D-72766 Reutlingen (DE)
(86) Internationale Anmeldenummer: DE9401148
(87) Internationale Veröffentlichungsnummer: WO9510135

(56) Entgegenhaltungen:
- EP-A- 0 018 465
- EP-A- 0 575 911
- DE-A- 3 931 093

## Beschreibung

### Stand der Technik

Die Erfindung geht aus von einem als Universalmotor ausgebildeten Elektromotor mit Mitteln zur Erfassung des Drehmomentes nach der Gattung des Hauptanspruchs. Eine Vorrichtung mit den Merkmalen des Oberbegriffs des Anspruchs 1 ist aus der DE-A-3 931 093 bekannt. Es ist schon bekannt, an einem Elektromotors das Drehmoment mittels eines Shunts über die Stromaufnahme des Motors indirekt zu messen. Durch das Drehmoment oder das Lastmoment ist eine Schutzschaltung für den Motor steuerbar, mit der der Motor bei Überlast abschaltbar ist. Bei Verwendung des Elektromotors in einem Elektroschrauber tritt dabei häufig das Problem auf, daß kleine Drehmomente bei niedrigen Drehzahlen nicht genau eingestellt werden können, da in der Praxis das Stromsignal relativ klein ist und stark schwankt und der Strom auch temperaturabhängig variiert. Außerdem muß der Anlaufstrom, der in der Regel größer als der im Arbeitspunkt bei konstantem Lastmoment fließende Strom ist, überwunden werden, wodurch unter Umständen ein größeres Drehmoment als das gewünschte Abschaltmoment erforderlich ist. Dieses größere Drehmoment würde jedoch sofort zum ungewünschten Abschalten des Motors im Schutzfalle oder der Schraubvorrichtung führen. Ein weiteres Problem bei der Verwendung des Motorstroms bzw. des Ankerstroms ist auch darin zu sehen, daß der Ankerstrom nicht nur von dem Lastmoment, sondern auch von dem an den Feldwicklungen entstehenden Spannungsabfall sowie von der Drehzahl des Motors abhängt. Hinzu kommmt, daß im Blockierfall ein Wiedereinschalten des Motors nur dann möglich ist, wenn die Schutzschaltung durch eine entsprechende Verzögerungsschaltung kurzzeitig umgangen wird. Der für diesen Fall fehlende Motorschutz ist jedoch unerwünscht. Schließlich ergibt sich bei der Messung des Motorstroms das Problem, daß durch Temperturerwärmung der Wirkwiderstand des Motors ansteigt und damit das erwartete Drehmoment sinkt.

### Vorteile der Erfindung

Der erfindungsgemäße Elektromotor mit den kennzeichnenden Merkmalen des Hauptanspruchs hat demgegenüber den Vorteil, daß eine exakte Drehmomentabschaltung auch bei kleinen Drehmomenten erfolgt, da nicht der Motorstrom gemessen wird, sondern die Drehzahldifferenz, die sich aufgrund der Belastung an der Abtriebswelle des Motors ergibt. Durch die Berücksichtigung der Drehzahldifferenz in bezug auf die vorgegebene Solldrehzahl ergibt sich der Vorteil, daß unabhängig von der Betriebsspannung oder der Temperatur des Motors der auf ein bestimmtes Lastmoment bezogene Drehzahlabfall leichter und genauer erfaßt werden kann als die Änderung des Motorstromes.

Durch die in den abhängigen Ansprüchen aufgeführten Maßnahmen sind vorteilhafte Weiterbildungen und Verbesserungen des im Hauptanspruch angegebenen Elektromotors mögich. Besonders vorteilhaft ist, daß in einem Speicher eine Referenztabelle angelegt ist, in der zu den Solldrehzahlen und Drehzahldifferenzen Lastmomente angegeben sind. Diese Tabelle kann leicht empirisch ermittelt werden, so daß ohne komplizierte Umrechnungen eine einfache Anpassung an verschiedene Motortypen möglich ist.

Eine besonders günstige Ermittlung ergibt sich, wenn durch Verwendung eines Algorithmus das Lastmoment direkt ermittelt werden kann. Dadurch wird Speicherplatz gespart, so daß die Steuervorrichtung preiswerter herstellbar ist.

Durch die Verwendung eines Proportionalreglers ist der Drehzahlabfall proportional zum Lastmoment, so daß fehlerhafte Drehmomentmessungen wegen der Nichtlinearität der Motorkennlinie Strom über Lastmoment vermieden werden.

Weiterhin ist vorteilhaft, die Steuerung oder Regelung mit einem Temperatursensor zu verbinden, so daß mit Hilfe der Temperaturwerte eine Korrektur des ermittelten Lastmomentes durchführbar ist. Besonders geeignet für die Ermittlung des Lastmomentes erscheint eine Steuerung mit einem Mikrocomputer. Mikrocomputer sind preiswert erhältlich und besonders gut für Regelungs- oder Steuerungsaufgaben geeignet.

Ein weiterer Vorteil ist auch darin zu sehen, daß mit Hilfe eines Korrekturfaktors die gespeicherten Werte für die Zuordnung der Lastmomente korrigierbar sind. Dadurch genügt es, für verschiedene Motortypen einen Standardspeicherbaustein mit empirisch ermittelten Daten eines bestimmten Motors zu verwenden. Für andere Motoren kann durch Multiplikation dieser Daten mit dem entsprechenden Korrekturfaktor eine breite Produktpalette abgedeckt werden.

Eine bevorzugte Anwendung des Elektromotors ist in einem Elektrohandwerkzeug zu sehen, das insbesondere als Bohrmaschine oder Schrauber ausgebildet ist. Gerade bei Schraubern besteht der Wunsch, die Schraube mit niedrigerer Drehzahl festzuziehen, bis das vorgegebene Solldrehmoment erreicht ist. Da die Drehzahl beim Festziehen einer Schraube sehr gering ist, ist die bekannte Bestimmung des Drehmomentes über die Stromaufnahme des Motors ungenau.

### Zeichnung

Ein Ausführungsbeispiel der Erfindung ist in der Zeichnung dargestellt und in der nachfolgenden Beschreibung näher erläutert. Es zeigen Figur 1 ein Blockschaltbild für die Anordnung, Figur 2 zeigt ein erstes Diagramm, Figur 3 zeigt ein zweites Diagramm, Figur 4 zeigt ein Blockschaltbild einer Steuerung, Figur 5 zeigt ein Flußdiagramm und Figur 6 zeigt einen Regler.

### Beschreibung des Ausführungsbeispiels

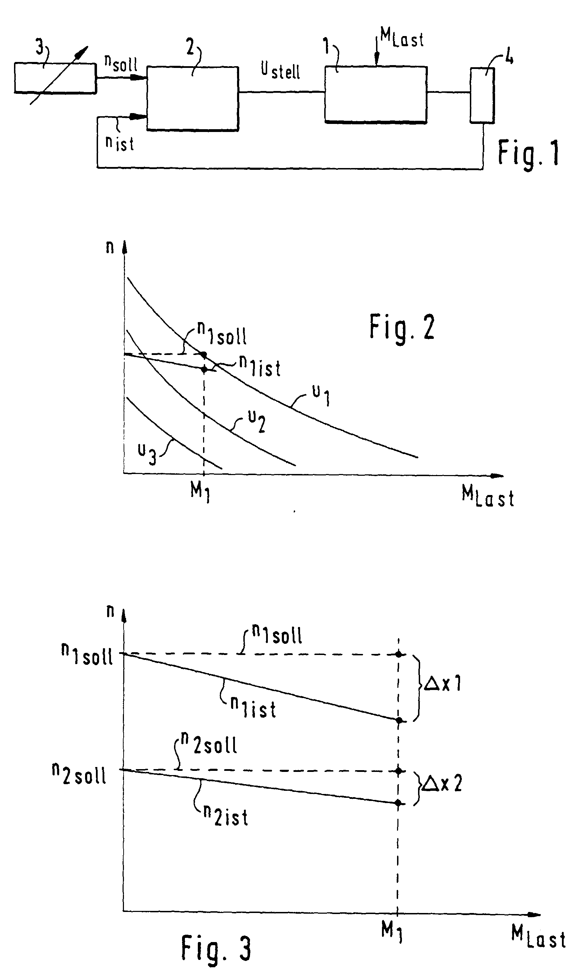

Figur 1 zeigt ein Blockschaltbild mit einem Elektromotor 1, der mit einer Steuerung 2, die auch als Regelung ausgebildet sein kann, verbunden ist und von dieser gesteuert wird. Der Elektromotor hat auf seiner Ankerwelle einen Sensor 4 zur Drehzahlermittlung des Motors. Als Sensor 4 wird vorteilhaft ein Tachogenerator verwendet, dessen abgegebene Spannung proportional zur Drehzahl der Ankerwelle ist. Der Sensor 4 mißt somit die aktuelle Istdrehzahl des Motors. Dieses Signal wird auf den Eingang der Steuerung 2 gegeben, und auf einen weiteren Eingang der Steuerung 2 wird die Solldrehzahl nₛₒₗₗ gegeben, die durch einen Geber 3 vorgebbar ist. Diese Anordnung wird beispielsweise in einem Elektrowerkzeug (Elektrohandwerkzeug) wie Bohrmaschine oder Schrauber verwendet. Die Steuerung 2 ist daher bekannt. Als Geber 3 kann ein Stellelement für die Drehzahlvorgabe der Bohrmaschine verwendet werden.

Figur 2 zeigt ein erstes Diagramm, bei dem die Drehzahl n über das Lastmoment Mₗₐₛₜ aufgetragen ist. Für verschiedene Spannungen u₁, u₂, u₃ ist jeweils die Motorkennlinie des Motors 1 aufgetragen. Üblicherweise wird bei Elektrowerkzeugen ein Regler verwendet, der aufgrund seiner Charakteristik in weiten Grenzen die Drehzahl lastunabhängig konstant hält. Beispielsweise wird die durch den Geber 3 vorgegebene Solldrehzahl n₁ₛₒₗₗ bis zum Drehmoment M₁ in etwa konstant gehalten. In der Praxis ist es jedoch so, daß bei Verwendung eins Reglers ohne I-Anteil eine bestimmte Drehzahlabweichung von der Solldrehzahl n₁ₛₒₗₗ auftritt, so daß die Istdrehzahl ₁ᵢₛₜ in jedem Fall kleiner als die Drehzahl n₁ₛₒₗₗ ist. Die Differenz hängt im wesentlichen vom Verstärkungsfaktor des verwendeten Reglertyps ab. Würde dagegen kein Regler eingesetzt werden, dann würde der Drehzahlverlauf entsprechend der dargestellten Kurven u₁, u₂, u₃ mit zunehmender Last abnehmen.

In Figur 3 ist dieser Zusammenhang noch einmal anhand von zwei Drehzahlen n₁, n₂ erläutert. Wird ein Proportional-Regler (P-Regler) verwendet, dann ist der Drehzahlabfall etwa proportional der Laständerung. Dieses wird in den Kurven n₁ᵢₛₜ, n₂ᵢₛₜ für die Solldrehzahl n₁ₛₒₗₗ bzw. n₂ₛₒₗₗ dargestellt. Diesem Diagramm ist weiter entnehmbar, daß der Drehzahlabfall Δx₁ für ein augenblickliches Lastmoment M₁ großer ist als bei einer kleinen Drehzahl n₂ mit der Differenz Δx₂. Dieser Einfluß der vorgegebenen Solldrehzahlen wird erfindungsgemäß dadurch berücksichtigt, daß der Drehzahlabfall Δx₁, Δx₂ auf die Solldrehzahl n₁ₛₒₗₗ, n₂ₛₒₗₗ bezogen wird.

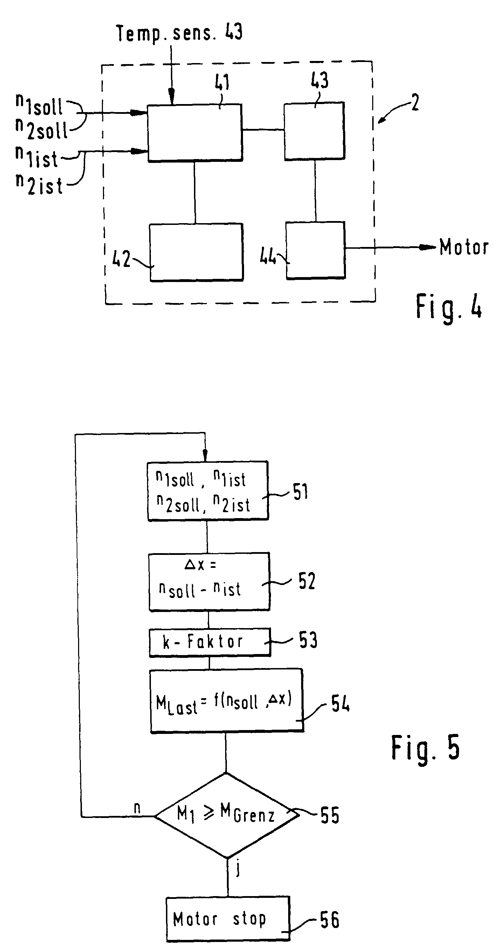

Die Berechnung von Δx₁, Δx₂ wird vorteilhaft durch die Steuerung 2 durchgeführt, die schematisch in Figur 4 dargestellt ist. Sie enthält einen Rechner 41, der mit einem Speicher 42 verbunden ist. An seinen Eingängen wird die Solldrehzahl n₁ₛₒₗₗ, n₂ₛₒₗₗ bzw. die Istdrehzahl n₁ᵢₛₜ, n₂ᵢₛₜ eingegeben. An seinem Ausgang wird ein Steuersignal ausgegeben, das auf eine Abschaltvorrichtung 43 geführt wird. Die Abschaltvorrichtung 43 weist beispielsweise einen Schalter oder ein Stellglied auf, das mit einem per se bekannten Regler 44 verbunden ist. Der Regler 44 ist als Phasenanschnittsteuerung ausgebildet, die den Stromflußwinkel für den Motor 1 steuert.

Anhand des Flußdiagramms der Figur 5 wird die Funktionsweise dieser Vorrichtung näher erläutert. In Position 51 wird die Solldrehzahl n₁ₛₒₗₗ, n₂ₛₒₗₗ und Istdrehzahl n₁ᵢₛₜ, n₂ᵢₛₜ in den Rechner 41 eingegeben. Der Rechner 41 ermittelt nun in Position 52 die Differenz Δx = (nₛₒₗₗ-nᵢₛₜ) für die augenblickliche Solldrehzahl. Sowohl die augenblickliche Solldrehzahl als auch die Differenz Δx werden zwischengespeichert. Dieses Ergebnis wird in Position 53 für einen bestimmten Motortyp mit einem Korrekturfaktor k multipliziert. Der Korrekturfaktor k wurde für einen bestimmten Motortyp entsprechend seiner Leistung, seines Kennfeldes, Temperaturverhaltes, etc. ermittelt. Diese k-Faktor wird werksseitig fest vorgegeben. Er kann aber auch wählbar sein, um damit auf einfache Weise das Abschaltmoment des Motors zu beeinflussen.

In Position 54 wird entweder mit einem Algorithmus oder einer Tabelle, die in dem Speicher 42 abgelegt ist, das zu der Drehzahldifferenz und der Solldrehzahl gehörende Lastmoment M₁ ermittelt. In der Abfrageposition 55 wird geprüft, ob das Lastmoment M₁ größer oder kleiner ist als ein Grenzmoment M_{grenz}. Ist dies nicht der Fall, dann wird wieder auf Position 51 zurückgesprungen. Ist dagegen das Lastmoment M₁ gleich oder größer als das Grenzmoment, dann wird in Position 56 beispielsweise der Motor abgeschaltet, ein Signal ausgegeben oder auf einen anderen Strom- oder Drehzahlwert umgeschaltet.

Da zu jeder Solldrehzahl und zu jeder Drehzahländerung für einen bestimmten Motortyp nur ein Drehmoment als Lastmoment zugeordnet werden kann, können auch kleine Drehmomentänderungen sicher detektiert werden.

In weiterer Ausgestaltung der Erfindung ist vorgesehen, den Rechner 41 mit einem Temperatursensor 43 zu verbinden, der entsprechend der Motortemperatur oder der Umgebungstemperatur oder der Temperaturdifferenz aus Motortemperatur und Umgebungstemperatur über den Korrekturfaktor kₜ das ermittelte Lastmoment korrigiert.

Da bei Verwendung eines P-Reglers die Drehzahl näherungsweise proportional zur Last abfällt, kann als erste Näherung folgender Algorithmus zugrundegelegt werden: Mₗₐₛₜ=a(nₛₒₗₗ-nᵢₛₜ), wobei der Faktor a als Proportionalitätsfaktor für den Regler in Verbindung mit dem Motor anzusehen ist. Dieser Faktor kann vorteilhaft empirisch ermittelt werden.

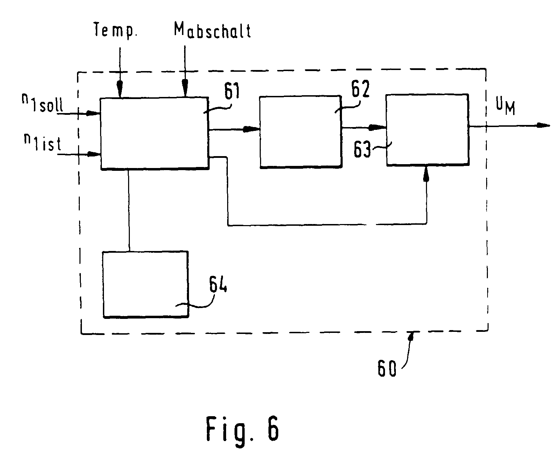

Figur 6 zeigt schematisch einen Regler, der durch einen Mikroprozessor 60 realisiert ist. Er hat eine Signalaufbereitung 61, die mit Gebern/Sensoren für die Drehzahlen nₛₒₗₗ, nᵢₛₜ, Temperatur und Drehmoment verbunden ist. Die Signalaufbereitung 61 ist auf einen Regler 62 geführt, der mit einem Stellglied 63 verbunden ist. Die Signalaufbereitung ist weiter mit einem Speicher 64 für Referenzwerte sowie über eine Abschaltleitung mit dem Stellglied 63 verbunden.

## Patentansprüche

1. Elektromotor mit Mitteln zur Erfassung des Drehmomentes, mit einem Geber zur Vorgabe einer Solldrehzahl, mit einem Sensor für die Erfassung der Istdrehzahl des Motors und mit einer Steuerung für die Umschaltung des Elektromotors bei Erreichen eines vorgebbaren Drehmomentes in einen zweiten Betriebszustand, dadurch gekennzeichnet, daß die Steuerung (2) ausgebildet ist, aus der vom Sensor (4) erfaßten Istdrehzahl (n₁ᵢₛₜ, n₂ᵢₛₜ) und der vorgegebenen Solldrehzahl (n₁ₛₒₗₗ, n₂ₛₒₗₗ) die aktuelle Drehzahldifferenz (Δx₁, Δx₂) zu bilden und mit Hilfe eines Speichers (42) aus der vorgegebenen Solldrehzahl (n₁ₛₒₗₗ, n₂ₛₒₗₗ) und der ermittelten aktuellen Drehzahldifferenz (Δx₁, Δx₂) das Lastmoment des Motors (1) zu bestimmen.

2. Elektromotor nach Anspruch 1, dadurch gekennzeichnet, daß der Speicher (42) eine Tabelle aufweist, in der der Drehzahldifferenz (Δx₁, Δx₂) und der Solldrehzahl (n₁ₛₒₗₗ, n₂ₛₒₗₗ) zugeordnete Lastmomentwerte gespeichert sind.

3. Elektromotor nach Anspruch 1, dadurch gekennzeichnet, daß die Steuerung (2) zur Bestimmung des Lastmomentes einen Algorithmus aufweist.

4. Elektromotor nach einem der vorhergehenden Ansprüche, dadurch gekennzeichnet, daß die Steuerung (2) einen Drehzahlregler mit Proportional-Charakteristik aufweist.

5. Elektromotor nach einem der vorhergehenden Ansprüche, dadurch gekennzeichnet, daß die Steuerung (2) mit einem Temperatursensor (43) verbunden ist, dessen Signale zur Korrektur des ermittelten Lastmomentes verwendbar sind.

6. Elektromotor nach einem der vorhergehenden Ansprüche, dadurch gekennzeichnet, daß die Steuerung einen Rechner (41) aufweist.

7. Elektromotor nach einem der vorhergehenden Ansprüche, dadurch gekennzeichnet, daß die Steuerung (2) einen Korrekturfaktor (k, a) zur Korrektur des Lastmomentes aufweist.

8. Elektromotor nach einem der vorhergehenden Ansprüche, dadurch gekennzeichnet, daß der Elektromotor (1) für ein Elektrohandwerkzeug, insbesondere eine Bohrmaschine oder einen Schrauber verwendbar ist.

## Claims

1. Electric motor with means for detecting the torque, with a sensor for predetermining a set rpm, with a sensor for detecting the actual rpm of the motor and with a control for switching over the electric motor into a second operating state when a predeterminable torque is reached, characterized in that the control (2) is constructed to form the instantaneous difference in rpm (Δx₁, Δx₂) from the actual rpm (n_{1act}, n_{2act}) detected by the sensor (4) and the predetermined set rpm (n₁ₛₑₜ, n₂ₛₑₜ), and to determine, with the aid of a memory (42), the load moment of the motor (1) from the predetermined set rpm (n₁ₛₑₜ, n₂ₛₑₜ) and the determined instantaneous difference in rpm (Δx₁, Δx₂).

2. Electric motor according to Claim 1, characterized in that the memory (42) has a table in which load moment values which are assigned to the difference in rpm (Δx₁, Δx₂) and the set rpm (n₁ₛₑₜ, n₂ₛₑₜ) are stored.

3. Electric motor according to Claim 1, characterized in that the control (2) has an algorithm for determining the load moment.

4. Electric motor according to one of the preceding claims, characterized in that the control (2) has an rpm controller with proportional characteristic.

5. Electric motor according to one of the preceding claims, characterized in that the control (2) is connected to a temperature sensor (43) whose signals can be used to correct the determined load moment.

6. Electric motor according to one of the preceding claims, characterized in that the control has a computer (41).

7. Electric motor according to one of the preceding claims, characterized in that the control (2) has a correction factor (k, a) for correcting the load moment.

8. Electric motor according to one of the preceding claims, characterized in that the electric motor (1) can be used for an electric hand tool, in particular a drill or a screwdriver.

## Revendications

1. Moteur électrique équipé de moyens pour détecter le couple, comprenant un capteur donnant une vitesse de rotation de consigne, un capteur pour détecter la vitesse de rotation réelle du moteur et une commande pour commuter le moteur électrique dans un second état de fonctionnement lorsqu'on atteint un couple prédéterminé,
caractérisé en ce que,
à partir de la vitesse de rotation réelle (n_{1réel}, n_{2réel}) détectée par le capteur (4) et la vitesse de rotation de consigne prédéterminée (n_{1cons}, n_{2cons}), la commande (2) forme la différence de vitesse de rotation actuelle (Δx₁, Δx₂) et à partir de la vitesse de rotation de consigne prédéterminée (n_{1cons}, n_{2cons}) et de la différence de vitesse de rotation actuelle, déterminée (Δx₁, Δx₂), enregistrées dans une mémoire (42), elle définit le couple de charge du moteur (1).

2. Moteur électrique selon la revendication 1,
caractérisé en ce que
la mémoire (42) contient un tableau des valeurs du couple de charge associées à la différence de vitesse de rotation (Δx₁, Δx₂) et la vitesse de rotation de consigne (n_{1cons}, n_{2cons}).

3. Moteur électrique selon la revendication 1,
caractérisé en ce que
la commande (2) comporte un algorithme pour déterminer le couple de charge.

4. Moteur électrique selon l'une des revendications précédentes,
caractérisé en ce que
la commande (2) comporte un régulateur de vitesse de rotation à caractéristique proportionnelle.

5. Moteur électrique selon l'une des revendications précédentes,
caractérisé en ce que
la commande (2) est reliée à un capteur de température (43) dont les signaux servent à corriger le couple de charge déterminé.

6. Moteur électrique selon l'une des revendications précédentes,
caractérisé en ce que
la commande comporte un calculateur (41).

7. Moteur électrique selon l'une des revendications précédentes,
caractérisé en ce que
la commande (2) comporte un coefficient de correction (k, a) pour corriger le couple de charge.

8. Moteur électrique selon l'une des revendications précédentes,
caractérisé en ce que
le moteur électrique (1) est applicable à un outil électrique, notamment une perceuse ou une visseuse.
